Europäisches Patentamt

European Patent Office

Office européen des brevets

(11) Veröffentlichungsnummer: **0 237 805 B1**

# (12) EUROPÄISCHE PATENTSCHRIFT

(45) Veröffentlichungstag der Patentschrift: **15.01.92**

(51) Int. Cl.5: **H04L 9/00**

(21) Anmeldenummer: **87102150.7**

(22) Anmeldetag: **16.02.87**

(54) **Verfahren und Anordnung zum Verhindern des Aussendens von unverschlüsselten Daten.**

(30) Priorität: **19.02.86 DE 3605230**

(43) Veröffentlichungstag der Anmeldung:
**23.09.87 Patentblatt 87/39**

(45) Bekanntmachung des Hinweises auf die
Patenterteilung:
**15.01.92 Patentblatt 92/03**

(84) Benannte Vertragsstaaten:
**CH DE GB IT LI NL**

(56) Entgegenhaltungen:
**US-A- 3 781 472**
**US-A- 4 249 180**

**PATENT ABSTRACTS OF JAPAN, Band 8, Nr.
200 (E-266)[1637], 13. September 1984; & JP-
A-59 89 054**

**ELECTRONICS, Band 52, Nr. 13, Juni 1979,
Seiten 107-120; H.J. HINDIN: "LSI-based data
encryption discourages the data thief"**

**PROCEEDINGS OF COMPCON FALL'78, COM-
PUTER COMMUNICATIONS NETWORKS, 5.-8.
September 1978, Seiten 348-350, IEEE, New
York, US; E. STEPHAN: "Communications
standards for using the des"**

(73) Patentinhaber: **SIEMENS AKTIENGESELL-
SCHAFT**
**Wittelsbacherplatz 2**
**W-8000 München 2(DE)**

(72) Erfinder: **Markwitz, Wernhard, Dr.-Ing**
**Thalkirchnerstrasse 107**
**W-8000 München 70(DE)**

**Beschreibung**

Die Erfindung bezieht sich auf ein Verfahren zum Verhindern des Aussendens von unverschlüsselten Daten gemäß dem Oberbegriff des Patentanspruchs 1. Weiterhin bezieht sich die Erfindung auf eine Anordnung zur Durchführung des Verfahrens.

In Daten- und Textendgeräten mit einer Verschlüsselungseinheit muß verhindert werden, daß ungewollt - auch nicht im Fehlerfalle - unverschlüsselte Daten ausgegeben oder übertragen werden.

In der Patentschrift US-A-4 249 180 ist ein System offenbart, in dem verschlüsselte sowie unverschlüsselte Daten über einen gemeinsamen Datenbus übertragen werden. Das Mikrorechnerprogramm soll hier dafür sorgen, daß keine verschlüsselten Daten unabsichtlich zum Sender abgegeben werden. Im Fehlerfalle ist dies jedoch nicht sichergestellt.

Es ist bekannt, in Daten- und Textendgeräten, die mit Verschlüsselungseinheiten versehen sind, eine schaltungsmäßige Trennung der Baueinheiten vorzunehmen, in denen unverschlüsselte und verschlüsselte Daten auftreten. Falls Daten oder Textgeräte mit Verschlüsselungseinheiten unter Verwendung von Mikrorechnern aufgebaut werden, ist es auch möglich, getrennte Daten und Adressenbusse für diejenigen Bereiche zu verwenden, in denen unverschlüsselte bzw. verschlüsselte Daten vorliegen. Ein solches System ist z.B. im Artikel von H.Hindin in der Zeitschrift "Electronics", Vol.52, Nummer 13, Seiten 107-120 erwähnt. Eine Verwendung der weiteren Daten- und Adressenbusse erfordert jedoch einen verhältnismäßig großen Aufwand.

Der Erfindung liegt daher die Aufgabe zugrunde, ein Verfahren und eine Anordnung anzugeben, die einen geringen Aufwand erfordern und die dennoch bei der Verwendung von Mikrorechnern sicherstellen, daß das Aussenden von unverschlüsselten Daten verhindert wird.

Erfindungsgemäß wird die Aufgabe bei dem Verfahren der eingangs genannten Art durch die im kennzeichnenden Teil des Patentanspruchs 1 angegebenen Merkmale gelöst.

Durch das Verfahren gemäß der Erfindung wird ein ungewolltes Aussenden von Daten durch Signale in dem Bussystem des Mikrorechners und auf Steuerleitungen verhindert. Diese Signale beeinflussen die Übertragung von Daten zu einer Sendeeinheit und die Signale werden von der Verschlüsselungseinheit ausgelöst.

Das Verfahren gemäß der Erfindung hat den Vorteil, daß nur ein einziges Bussystem erforderlich ist, das den Mikrorechner mit der Verschlüsselungseinheit und der Sendeeinheit verbindet und daß dennoch das Aussenden von unverschlüsselten Daten verhindert wird.

Als Anforderungssignal kann ein an sich bekanntes Signal für die Anforderung einer Unterbrechung des Mikroprozessors vorgesehen sein, das allgemein unter der Bezeichnung "Interrupt request" (INT.REQ) bekannt ist. Der Mikrorechner reagiert auf dieses Signal mit einem Quittungssignal für eine Unterbrechung, das allgemein unter der Bezeichnung "Interupt acknowledge" (INT.ACK) bekannt ist. Es ist auch möglich, die Übertragung der Daten von der Verschlüsselungseinheit zu der Sendeeinheit dadurch einzuleiten, daß das Anforderungssignal als ein Signal für eine Anforderung eines direkten Speicherzugriffs ausgebildet ist, das allgemein unter der Bezeichnung "direct memory access request" (DMA.REQ) bekannt ist. In diesem Fall reagiert der Mikrorechner mit einem Quittungssignal für einen direkten Speicherzugriff, das allgemein unter der Bezeichnung "direct memory access acknowledge" (DMA.ACK) bekannt ist.

In beiden Fällen ist für eine Übertragung der Daten von der Verschlüsselungseinheit zur Sendeeinheit zusätzlich erforderlich, daß sowohl die Verschlüsselungseinheit durch ein erstes Auswahlsignal als auch die Sendeeinheit durch ein zweites Auswahlsignal ausgewählt wird. Diese Auswahlsignale sind zweckmäßigerweise Auswahlsignale, die von einem an einem Adressenbus des Mikrorechners angeschlossenen Adressendecodierer abgegeben werden und die allgemein unter der Bezeichnung "Chip-select"-Signale bekannt sind.

Zur weiteren Erhöhung der Sicherheit wird in der Verarbeitungseinheit im Fehlerfall ein Alarmsignal erzeugt, das in jedem Fall das Aussenden der Daten von der Sendeeinheit sperrt.

Bei einer bevorzugten Ausführungsform einer Anordnung gemäß der Erfindung ist die Verarbeitungseinheit einerseits über den Datenbus und andererseits über Steuer leitungen für das Anforderungssignal und/oder das Quittungssignal mit dem Mikrorechner verbunden und der Sendeeinheit ist ein Verknüpfungsglied vorgeschaltet, das das zweite Auswahlsignal mit einem dem Quittungssignal zugeordneten Signal entsprechend einer UND-Verknüpfung verknüpft und dessen Ausgangssignal die Sendeeinheit freigibt. Dem Verknüpfungsglied wird neben dem zweiten Auswahlsignal entweder das Quittungssignal unmittelbar oder über die Verschlüsselungseinheit zugeführt.

Dem Ausgang der Sendeeinheit ist bei einer bevorzugten Ausführungsform ein weiteres Verknüpfungsglied nachgeschaltet, das das Ausgangssignal der Sendeeinheit mit dem von der Verschlüsselungseinheit abgegebenen Alarmsignal entsprechend einer UND-Verknüpfung verknüpft und das beim Auftreten des Alarmsignals das Aussenden von Daten verhindert.

Das Verfahren gemäß der Erfindung wird im folgenden anhand einer Zeichnung im Zusammenhang mit Ausführungsbeispielen von Anordnungen zur Durchführung des Verfahrens näher erläutert.

Es zeigen

Fig. 1 ein Schaltbild einer ersten Ausführungsform der Anordnung zur Durchführung des Verfahrens,

Fig. 2 ein Schaltbild einer zweiten Ausführungsform einer Anordnung zur Durchführung des Verfahrens.

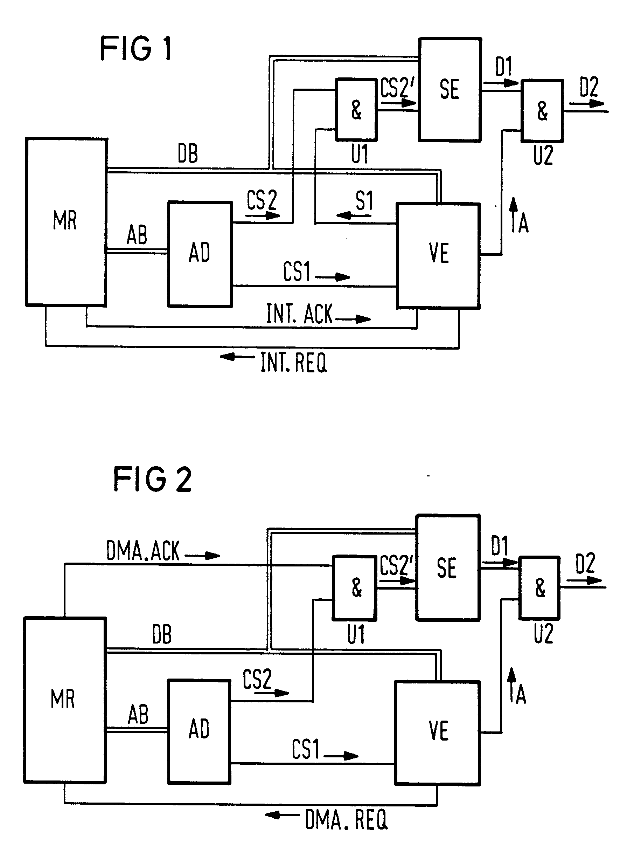

Die in Fig. 1 dargestellte Ausführungsform der Anordnung enthält einen Mikrorechner MR, der den Ablauf von Funktionen in einem mit einer Verschlüsselungseinheit VE versehenen Daten- oder Textendgerät steuert. Der Mikrorechner MR steuert auch die Übertragung von verschlüsselten Daten von der Verschlüsselungseinheit VE zu einer Sendeeinheit SE über einen Datenbus DB. Um zu verhindern, daß auch in der Verschlüsselungseinheit VE vorliegende unverschlüsselte Daten zur Sendeeinheit SE gelangen und ausgesendet werden, werden in der Anordnung besondere Vorkehrungen getroffen. Die Sendeeinheit SE gibt nur dann Daten D1 ab, wenn zuvor die Verschlüsselungseinheit VE und die Sendeeinheit SE durch entsprechende Auswahlsignale CS1 bzw. CS2 ausgewählt wurden. Diese Auswahlsignale CS1 bzw. CS2, werden von einem Adressendecodierer AD erzeugt, der über einen Adressenbus AB an dem Mikrorechner MR angeschlossen ist. Die Auswahlsignale CS1 und CS2 sind Signale, die an sich unter der Bezeichnung "Chip-select"-Signale bekannt sind. Wenn verschlüsselte Daten zu der Sendeeinheit SE übertragen werden sollen, gibt die Verschlüsselungseinheit VE ein Anforderungssignal INT.REQ an den Mikrorechner MR ab. Dieses Anforderungssignal INT.REQ, das im Zusammenhang mit Mikrorechnern allgemein unter der Bezeichnung "Interupt request" bekannt ist, bewirkt im Mikrorechner MR eine Unterbrechung des gerade ablaufenden Programms und er quittiert dieses Anforderungssignal mit einem Quittungssignal INT.ACK, das im Zusammenhang mit Mikrorechnern allgemein unter der Bezeichnung "Interupt acknowledge" bekannt ist. Die Verarbeitungseinheit VE erzeugt nach dem Empfangen des Quittungssignals INT.ACK ein Steuersignal S1, das einem ersten Eingang eines UND-Gliedes U1 zugeführt wird. An dem zweiten Eingang liegt das Auswahlsignal CS2 an und das UND-Glied U1 erzeugt ein Auswahlsignal CS2' und führt es als Freigabesignal der Sendeeinheit SE zu. Anschließend behandelt der Mikrorechner MR die Unterbrechungsanforderung und übertragt programmgesteuert eines oder mehrere verschlüsselte Daten von der Verschlüsselungseinheit VE zur Sendeeinheit SE. Die verschlüsselten Daten werden als Datensignale D1 am Ausgang der Sendeeinheit SE abgegeben.

Da die Datensignale D1 nur dann abgegeben werden, wenn die Auswahlsignale CS1 und CS2, das Anforderungssignal INT.REQ, das Quittungssignal INT.ACK und das Signal S1 aufgetreten sind, ist sichergestellt, daß aufgrund von Störungen nicht versehentlich unverschlüsselte Daten über den Datenbus DB zur Sendeeinheit SE gelangen.

Die Sicherheit zum Verhindern des Aussendens von unverschlüsselten Daten wird weiterhin dadurch erhöht, daß der Sendeeinheit SE ein UND-Glied U2 nachgeschaltet wird, an dessen erstem Eingang die Datensignale D1 anliegen und an dessen zweitem Eingang ein von der Verschlüsselungseinheit VE im Fehlerfall abgegebenes Alarmsignal A anliegt, das verhindert, daß den Datensignalen D1 zugeordnete Datensignale D2 unbeabsichtigt ausgesendet werden.

Die in Fig. 2 dargestellte Anordnung stimmt mit der in Fig. 1 dargestellten Anordnung weitgehend überein. Sie enthält ebenfalls den Mikrorechner MR, den Adressendecodierer AD, die Verschlüsselungseinheit VE, die Sendeeinheit SE und die UND-Glieder U1 und U2. Als Anforderungssignal gibt die Verschlüsselungseinheit VE anstelle des Anforderungssignals INT.REQ ein Anforderungssignal für einen direkten Speicherzugriff des Mikrorechners DMA.REQ ab, das allgemein unter der Bezeichnung "direct memory access request" bekannt ist. Als Quittungssignal gibt der Mikrorechner MR in diesem Fall ein Signal DMA.ACK ab, das allgemein unter der Bezeichnung "direkt memory access acknowledge" bekannt ist. Dieses Signal wird anstelle des Quittungssignals INT.ACK oder des Signals S1 in Fig. 1 dem UND-Glied U1 oder der Verschlüsselungseinheit VE zugeführt. Bei dieser Ausführungsform der Anordnung erfolgt somit nur dann eine Übertragung von Daten von der Verschlüsselungseinheit VE zur Sendeeinheit SE, wenn die Auswahlsignale CS1 und CS2, das Anforderungssignal DMA.REQ und das Quittungssignal DMA.ACK aufgetreten sind. Auch bei dieser Anordnung werden die von der Sendeeinheit SE abgegebenen Datensignale D1 in dem UND-Glied U2 mit dem von der Verschlüsselungseinheit VE abgegebenen Alarmsignal A verknüpft, um in jedem Fall eine Übertragung von Daten zu verhindern, wenn im Fehlerfall die Verschlüsselungseinheit VE das Alarmsignal A abgibt.

**Patentansprüche**

1. Verfahren zum Verhindern des Aussendens von unverschlüsselten Daten durch eine Sendeeinheit, von der normalerweise verschlüsselte Daten abgegeben werden, die in einer Verschlüsselungseinheit aus den unverschlüsselten Daten erzeugt werden, wobei die Verschlüsselungseinheit über einen gemeinsamen Datenbus mit der Sendeeinheit und einem Mikrorechner verbunden ist,

**dadurch gekennzeichnet,**

daß von der Sendeeinheit (SE) nur dann Datensignale (D1) abgegeben werden, wenn

a) der Mikrorechner (MR) die Verschlüsselungseinheit (VE) durch ein von einem Adressendecodierer (AD) abgegebenes erstes Auswahlsignal (CS1) ansteuert,

b) die Verschlüsselungseinheit (VE) ein Anforderungssignal (INT.REQ; DMA.REQ) an den Mikrorechner (MR) abgibt,

c) der Mikrorechner (MR) das Anforderungssignal (INT.REQ; DMA.REQ) mit einem Quittungssignal (INT.ACK; DMA.ACK) beantwortet und

d) nach dem Vorliegen sowohl eines Quittungssignals (INT.ACK; DMA.ACK) als auch eines von dem Adressendecodierer (AD) abgegebenen zweiten Auswahlsignals (CS2) die Sendeeinheit (SE) freigegeben wird.

2.  Verfahren nach Anspruch 1,
    **dadurch gekennzeichnet,**
    daß als Anforderungssignal das an sich bekannte Anforderungssignal für eine Unterbrechung (INT.REQ) des Mikrorechners (MR) und als Quittungssignal das an sich bekannte Quittungssignal für eine Unterbrechung (INT.ACK) des Mikrorechners (MR) verwendet wird.

3.  Verfahren nach Anspruch 1,
    **dadurch gekennzeichnet,**
    daß als Anforderungssignal das an sich bekannte Anforderungssignal für einen direkten Speicherzugriff (DMA.REQ) des Mikrorechners (MR) und als Quittungssignal das an sich bekannte Quittungssignal für einen direkten Speicherzugriff (DMA.ACK) des Mikrorechners (MR) verwendet wird.

4.  Verfahren nach einem der Ansprüche 1 bis 3,
    **dadurch gekennzeichnet,**
    daß in der Verschlüsselungseinheit (VE) in einem Fehlerfall ein Alarmsignal (A) erzeugt wird, das das Aussenden der Datensignale (D1) von der Sendeeinheit (SE) sperrt.

5.  Verfahren nach einem der Ansprüche 1 bis 4,
    **dadurch gekennzeichnet,**
    daß als Auswahlsignale (CS1, CS2) von einem Adressenbus (AB) des Mikrorechners (MR) abgegebene Auswahlsignale (CS1, CS2) verwendet werden.

6.  Anordnung zur Durchführung des Verfahrens nach Anspruch 1, mit einer Sendeeinheit (SE), von der normalerweise verschüsselte Daten abgegeben werden, und einer Verschlüsselungseinheit (VE), in der die verschlüsselten Daten aus den unverschlüsselten Daten erzeugt werden, wobei die Verschlüsselungseinheit über einen gemeinsamen Datenbus mit der Sendeeinheit und einem Mikrorechner (MR) verbunden ist,

    **dadurch gekennzeichnet,**

    daß die Verschlüsselungseinheit (VE) über einen Datenbus (DB) und über Steuerleitungen mit dem Mikrorechner (MR) verbunden ist, über die das Anforderungssignal (INT.REQ; DMA.REQ) und das Quittungssignal (INT.ACK; DMA.ACK) übertragen werden, daß an den Adressenbus (AB) des Mikrorechners (MR) der Adressendecodierer (AD) angeschlosen ist, der sowohl mit der Verschlüsselungseinheit (VE) als auch mit dem ersten Eingang eines UND-Gliedes (U1) verbunden ist, an dessen zweitem Eingang das Quittungssignal (INT.ACK; DMK.ACK) oder ein diesem zugeordnetes Signal (S1) anliegt und das ein Freigabesignal (CS2') an einen Freigabeeingang der Sendeeinheit (SE) abgibt.

7.  Anordnung nach Anspruch 6,
    **dadurch gekennzeichnet,**
    daß der zweite Eingang des UND-Gliedes (U1) mit der Verschlüsselungseinheit (VE) verbunden ist.

8.  Anordnung nach Anspruch 6,
    **dadurch gekennzeichnet,**
    daß der zweite Eingang des UND-Gliedes (U1) mit dem Mikrorechner (MR) verbunden ist.

9.  Anordnung nach einem der Ansprüche 6 bis 8,
    **dadurch gekennzeichnet,**
    daß ein weiteres UND-Glied (U2) vorgesehen ist, das mit der Sendeeinheit (SE) und der Verschlüsselungseinheit (VE) verbunden ist und das von der Sendeeinheit (SE) abgegebene Datensignale (D1) nur dann zu seinem Ausgang durchschaltet, wenn die Verschlüsselungseinheit (VE) kein Alarmsignal (A) abgibt.

**Claims**

1.  Method for preventing the transmission of unciphered data by a transmitter unit, from which enciphered data are normally output which are generated in an encryption unit from the unciphered data, in which the encryption unit is connected via a common data bus to the transmitter unit and a microprocessor, characterised in that data signals (D1) are output by the transmitter unit (SE) only when

a) the microprocessor (MR) addresses the encryption unit (VE) by means of a first selection signal (CS1) output by an address decoder (AD),

b) the encryption unit (VE) outputs a request signal (INT.REQ; DMA.REQ) to the microprocessor (MR),

c) the microprocessor (MR) answers the request signal (INT.REQ; DMA.REQ) with an acknowledgement signal (INT.ACK; DMA.ACK), and

d) the transmitter unit is enabled following the presence of both an acknowledgement signal (INT.ACK; DMA.ACK) and a second selection signal (CS2) output by the address decoder (AD).

2. Method according to Claim 1, characterised in that the request signal which is known per se for an interrupt (INT.REQ) of the microprocessor (MR) is used as request signal, and the acknowledgement signal which is known per se for an interrupt (INT.ACK) of the microprocessor (MR) is used as acknowledgement signal.

3. Method according to Claim 1, characterised in that the request signal which is known per se for a direct memory access (DMA.REQ) of the microprocessor (MR) is used as request signal, and the acknowledgement signal which is known per se for a direct memory access (DMA.ACK) of the microprocessor (MR) is used as acknowledgement signal.

4. Method according to one of Claims 1 to 3, characterised in that in the event of an error an alarm signal (A) is generated in the encryption unit (VE) which disables the transmission of the data signals (D1) from the transmitter unit (SE).

5. Method according to one of Claims 1 to 4, characterised in that selection signals (CS1, CS2) output from an address bus (AB) of the microprocessor (MR) are used as selection signals (CS1, CS2).

6. Arrangement for carrying out the method according to Claim 1, with a transmitter unit (SE), from which enciphered data are normally output, and an encryption unit (VE) in which the enciphered data are generated from the unciphered data, the encryption unit being connected via a common data bus to the transmitter unit and a microprocessor (MR), characterised in that the encryption unit (VE) is connected via a data bus (DB) and via control lines to the microprocessor (MR), via which the request signal (INT.REQ; DMA.REQ) and the acknowledgement signal (INT.ACK; DMA.ACK) are transmitted, in that the address decoder (AD) is connected to the address bus (AB) of the microprocessor (MR), which address decoder is connected both to the encryption unit (VE) and to the first input of an AND element (U1), to the second input of which the acknowledgement signal (INT.ACK; DMA.ACK) or a signal (S1) assigned thereto is applied, and which outputs an enable signal (CS2') to an enable input of the transmitter unit (SE).

7. Arrangement according to Claim 6, characterised in that the second input of the AND element (U1) is connected to the encryption unit (VE).

8. Arrangement according to Claim 6, characterised in that the second input of the AND element (U1) is connected to the microprocessor (MR).

9. Arrangement according to one of Claims 6 to 8, characterised in that a further AND element (U2) is provided which is connected to the transmitter unit (SE) and to the encryption unit (VE), and which connects through data signals (D1) output by the transmitter unit (SE) to its output only if the encryption unit (VE) does not output any alarm signal (A).

**Revendications**

1. Procédé pour empêcher l'émission de données non codées par une unité d'émission qui délivre des données normalement codées, qui sont produites dans une unité de codage à partir des données non codées, l'unité de codage étant raccordée par l'intermédiaire d'un bus commun de transmission de données à l'unité d'émission et à un microordinateur, caractérisé par le fait

que l'unité d'émission (SE) ne délivre des signaux de données (D1) que lorsque

a) le micro-ordinateur (MR) commande l'unité de codage (VE) à l'aide d'un premier signal de sélection (CS1) délivré par un décodeur d'adresses (AD),

b) l'unité de codage (VE) envoie un signal de demande (INT.REQ; DMA.REQ) au micro-ordinateur (MR),

c) le micro-ordinateur (MR) répond au signal de demande (INT.REQ; DMA.REQ) par un signal d'accusé de réception (INT.ACK; DMA.ACK), et

d) lors de la présence aussi bien d'un signal d'accusé de réception (INT.ACK; DMA.ACK) que d'un second signal de sélection (CS2) délivré par le décodeur d'adresses (AD), l'unité d'émission (SE) est libérée.

**2.** Procédé selon la revendication 1, caractérisé en ce que

on utilise comme signal de demande le signal de demande connu en soi pour une interruption (INT.REQ) du micro-ordinateur (MR) et, en tant que signal d'accusé de réception, le signal d'accusé de réception connu en soi pour une interruption (INT.ACK) du micro-ordinateur (MR).

**3.** Procédé suivant la revendication 1, caractérisé en ce que

on utilise comme signal de demande le signal de demande connu en soi pour un accès direct en mémoire (DMA.REQ) du microordinateur (MR) et en tant que signal d'accusé de réception le signal d'accusé de réception connu en soi pour un accès direct en mémoire (DMA.ACK) du micro-ordinateur (MR).

**4.** Procédé selon l'une des revendications 1 à 3, caractérisé en ce qu'un signal d'alarme (A), qui bloque l'émission des signaux de données (D1) par l'unité d'émission (SE), est produit dans l'unité de codage (VE), dans le cas d'une erreur.

**5.** Procédé selon l'une des revendications 1 à 4, caractérisé en ce qu'on utilise comme signaux de sélection (CS1, CS2), les signaux de sélection (CS1, CS2) délivrés à un bus de transmission d'adresses (AB) du micro-ordinateur (MR).

**6.** Dispositif pour la mise en oeuvre du procédé selon la revendication 1 comportant une unité d'émission (SE) qui délivre des données normalement codées, et une unité de codage (VE), dans laquelle les données codées sont produites à partir des données non codées, l'unité de codage étant raccordée par l'intermédiaire d'un bus commun de transmission de données à l'unité d'émission et à un micro-ordinateur (MR), caractérisé par le fait

que l'unité de codage (VE) est raccordée au micro-ordinateur (MR) par l'intermédiaire d'un bus de transmission de données (DB) ou par l'intermédiaire de lignes de commande, au moyen desquelles le signal de demande (INT.REQ; DMA.REQ) et le signal d'accusé de réception (INC.ACK; DMA.ACK) sont transmis, qu'au bus de transmission d'adresses (AB) du micro-ordinateur (MR) est raccordé le décodeur d'adresses (AD), qui est raccordé aussi bien à l'unité de codage (VE) qu'à la première entrée d'un circuit ET (U1), à la seconde entrée duquel est appliqué le signal d'accusé de réception (INT.ACK; DMA.ACK) ou un signal (S1) associé à ce signal, et qui envoie un signal de libération (CS2') à une entrée de libération de l'unité d'émission (SE).

**7.** Dispositif suivant la revendication 6, caractérisé par le fait que la seconde entrée du circuit ET (U1) est raccordée à l'unité de codage (VE).

**8.** Dispositif suivant la revendication 6, caractérisé en ce que la seconde entrée du circuit ET (U1) est raccordée au micro-ordinateur (MR).

**9.** Dispositif suivant l'une des revendications 6 à 8, caractérisé en ce qu'il est prévu un autre circuit ET (U2), qui est raccordé à l'unité d'émission (SR) et à l'unité de codage (VE) et transmet directement les signaux de données (D1), délivrés par l'unité d'émission (S4), à sa sortie, uniquement lorsque l'unité de codage (VE) ne délivre aucun signal d'alarme (A).

# FIG 1

# FIG 2